# EUROPEAN PATENT SPECIFICATION

(11) **EP 2 624 643 B1**
(45) Date of publication and mention of the grant of the patent: **25.03.2015**
(21) Application number: 13153509.8
(22) Date of filing: 31.01.2013
(51) Int. Cl.: H04W 64/00

(54) **A method for searching the location of multi-SIM mobile terminal and an apparatus thereof**
Verfahren zum Suchen des Standorts eines mobilen Mehrfach-SIM-Endgeräts und Verfahren dafür
Procédé pour rechercher l'emplacement du terminal mobile impliquant plusieurs SIM et appareil associé

(30) Priority: 02.02.2012 KR 20120010713
(43) Date of publication of application: 07.08.2013
(73) Proprietor: Samsung Electronics Co., Ltd, Gyeonggi-do 443-742 (KR)
(72) Inventor: Shin, Simon, Gyeonggi-do, (KR)
(74) Representative: Birchenough, Lewis

(56) References cited:
- GB-A- 2 383 215
- US-A1- 2009 047 979
- US-A1- 2010 120 435
- US-A1- 2010 208 649
- US-A1- 2011 009 132

## Description

### BACKGROUND OF THE INVENTION

### 1. Technical Field

The present invention relates generally to a method and apparatus for determining the location of a mobile terminal, and in particular, although not exclusively, for determining the location of a multi- Subscriber Identification Module (SIM) mobile terminal.

### 2. Description of the Related Art

As is well known, mobile terminals developed for the purpose of using mobile communication services are widely used and considered by many as a necessity of everyday life. Today's mobile terminals have increased functionality compared to mobile terminal of the past, and typically provide various functionality, for example a computer-based function such as Internet communication, an information search, etc., and can have install therein an application desired by a user for providing additional functionality. In particular, a service for determining the location of the mobile terminal may be provided, for example through a location determining application. Location-based services are frequently utilized throughout everyday life.

A location-based service may include various services, for example a weather service for providing weather information for a region where a mobile phone is located, a traffic information service capable of finding a shortcut to avoid heavy traffic, a consumer information service for finding a nearby entity such as a department store, medical center, theater, restaurant, and the like, a telematics service for providing information while traveling, etc.

It is desirable for a location-based service to be able to determine the location of the mobile terminal with high accuracy. Various methods may be used to determine the location of a mobile terminal, including, for example, a network-based scheme that uses the strength of radio waves and cell information including a base station identifier (or a cell identifier (ID)), and a satellitenavigation-based scheme, for example the Global Positioning System (GPS). The network-based scheme is a relatively simple positioning technique that does not require additional devices such as satellites or a satellite receiver at the mobile terminal. Thus, the network scheme has an advantage of simplicity, but suffers a disadvantage in that its accuracy is typically lower than that of a satellite-navigation-based scheme, for example GPS.

Multi-SIM mobile terminals capable of employing a plurality of Subscriber Identification Modules (SIMs) have recently become more popular. A SIM stores personal information capable of providing various services of a mobile communication vendor, such as subscriber authentication, accounting, and security functions. Accordingly, a multi-SIM mobile terminal can provide services of a plurality of mobile communication vendors.

Currently, if the location of a multi-SIM mobile terminal is determined using a network-based scheme, cell information of a mobile network corresponding to only one SIM is used.

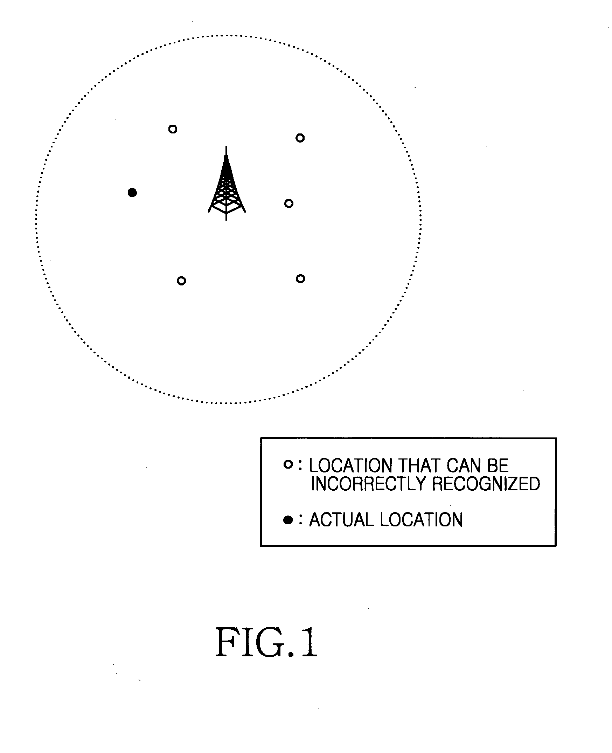

FIG. 1 illustrates a conventional method for determining the location of a multi-SIM mobile terminal. As illustrated, if a communication state of a mobile network associated with one of the SIMs is poor, the estimated location of the multi-SIM mobile terminal may be inaccurate. For instance, excessive noise, low signal level, or interfering signals may inhibit the ability to correctly determine distance of the mobile terminal from a serving base station, leading to erroneous calculations. Accuracy of location information may significantly vary depending on the radius of a cell. Thus, a need exists to address these problems and provide a way to obtain reliable location information for multi-SIM modules using a network-based scheme.

GB 2383215 A describes a technique for determining the location of a mobile terminal using the distances from the mobile terminal to at least three base stations calculated using Timing Advanced signals.

US 2010/0208649 A1 describes a technique in which the location of a User Equipment is determined by a plurality of mobile networks using a cell-identity method, Observed Time Difference Of Arrival method, Uplink-Time Difference Of Arrival method, or network-assisted GPS positioning method.

Various other techniques are described in US 2010/120435 A1, US 2011/009132 A1 and US 2009/047979 A1.

### SUMMARY OF THE INVENTION

It is an aim of certain embodiments of the present invention to address, solve, mitigate or obviate, at least partly, at least one of the problems and/or disadvantages associated with the related art, for example the above-mentioned problems and/or disadvantages. Certain embodiment aim to provide at least one of the advantages described below.

Accordingly, certain embodiments of the present invention provide a method and apparatus for determining the location of a multi-Subscriber Identification Module (SIM) mobile terminal, for example without using an additional or dedicated device for determining the location, for example, a Global Positioning System (GPS) receiver.

In accordance with an aspect of the present invention, there is provided a method of determining a location of a multi-Subscriber Identification Module, SIM, mobile terminal having at least first and second SIMs mounted therein, the method comprising: determining network quality of a first mobile network using the first SIM and a second mobile network using the second SIM; and if the network quality of both the first and second mobile networks are above a threshold: determining a first location based on a location of at least one first base station in the first mobile network; determining a second location based on a location of at least one second base station in the second mobile network; and estimating the location of the multi-SIM mobile terminal from the first and second locations, if the network quality of one of the first and second mobile networks is above the threshold: determining a location based on a location of at least one base station in the one of the first and second mobile networks; and estimating the location of the multi-SIM mobile terminal from the location.

In accordance with another aspect of the present invention, there is provided an apparatus for determining a location of a multi-SIM mobile terminal, the apparatus comprising: a SIM acceptor within which at least first and second SIMs are mounted; and a mobile communication unit coupled to the SIM acceptor and configured to: determine network quality of a first mobile network using the first SIM and a second mobile network using the second SIM, if the network quality of both the first and second mobile networks are above a threshold, determine a first location based on a location of at least one first base station in the first mobile network, determine a second location based on a location of at least one second base station in the second mobile network, and estimate the location of the multi-SIM mobile terminal from the first and second locations, and if the network quality of one of the first and second mobile networks is above the threshold, determine a location based on a location of at least one base station in the one of the first and second mobile networks, estimate the location of the multi-SIM mobile terminal from the location.

In accordance with various exemplary embodiments, a method, apparatus and system for determining a location of a multi-Subscriber Identification Module (SIM) mobile terminal that is capable of having at least first and second SIMs mounted therein are provided. The first and second SIMs are associated with respective first and second mobile networks using different base stations. A first location is determined based on a location of at least one first base station in the first network and receive signal strength at the mobile terminal of a signal transmitted by the at least one first base station. A second location is determined based on a location of at least one second base station in the second network associated with the second SIM and receive signal strength at the mobile terminal of a signal transmitted by the at least one second base station. The location of the mobile terminal is then estimated from the first and second locations.

In an exemplary embodiment of the present invention, a method for determining the location of a multi-SIM mobile terminal that is capable of having at least first and second SIMs mounted therein, is provided. The method comprises: determining whether first and second SIMs mounted in the multi-SIM mobile terminal are associated with a common mobile network or with different mobile networks. The method further comprises: if the first and second SIMs are associated with different mobile networks, determining a first location based on a location of at least one first base station in a first network associated with the first SIM and receive signal strength of a signal transmitted by the at least one first base station; determining a second location based on a location of at least one second base station in a second network associated with the second SIM and receive signal strength of a signal transmitted by the at least one second base station; and estimating the location of the multi-SIM mobile terminal from the first and second locations. The method further comprises: if the first and second SIMs are associated with a common (e.g. the same) network, estimating the location of the multi-SIM mobile terminal based on the receive signal strength of a signal transmitted by at least one base station in the common network and a location of the at least one base station in the common network.

In another exemplary embodiment of the present invention, an apparatus for determining a location of a multi-SIM mobile terminal is provided. The apparatus comprising: a SIM interface into which at least first and second SIMs are capable of being mounted; and a mobile communication unit coupled to the SIM interface, wherein the mobile communication unit is configured to determine whether the first and second SIMs are associated with a common (e.g. the same) mobile network or with different mobile networks. If the first and second SIMs are associated with different mobile networks, the mobile communication unit is configured to: receive or determine a first location based on a location of at least one first base station in a first network associated with the first SIM and receive signal strength of a signal transmitted by the at least one first base station; receive or determine a second location based on a location of at least one second base station in a second network associated with the second SIM and receive signal strength of a signal transmitted by the at least one second base station; and estimate the location of the mobile terminal from the first and second locations. The mobile communication unit is further configured for estimating the location of the multi-SIM mobile terminal based on the receive signal strength of a signal transmitted by at least one base station in the common network and a location of the at least one base station in the common network, if the mobile communication unit determines that the first and second SIMs are associated with the common network.

In an exemplary embodiment, the estimated location may be determined as a middle point of the first and second locations.

In an exemplary embodiment, the at least one first base station in the first mobile network may comprise a serving first base station and at least one neighboring first base station. In this case, the first location is determined as a function of locations of the serving first base station and the at least one neighboring first base station in conjunction with received signal strengths at the mobile terminal of signals transmitted by the serving first base station and the at least one neighboring first base station. Similarly, the second location may be determined based on locations of a second serving base station and at least one neighboring second base station in conjunction with receive signal strengths thereof.

In an exemplary embodiment, the determination of the first and second locations may be performed by first and second servers in the first and second networks, respectively. In this case, the mobile terminal transmits the relevant receive signal strengths to the servers, which use pre-stored location information of the corresponding base stations to compute the respective first and second locations. The mobile terminal may transmit base station identifiers (received from the base stations) along with the receive signal strengths to the respective servers, where the servers correlate the identifiers to base station location information in a database (e.g. the server stores information that maps identifiers to corresponding base station locations).

In an exemplary embodiment, in an alternative implementation, instead of estimating the location from the first and second locations, the mobile terminal may select cell information of one of the first and second networks in which communication quality is superior to estimate the mobile terminal location. For instance, if the second network is determined to have better communication quality, the location is determined based on the locations of the second serving base station and at least one neighboring second base station in conjunction with the receive signal strengths of only these second base stations.

In an exemplary embodiment, the mobile terminal may further include the capability of using GPS location determination. Further, if the first and second SIMs are determined to be operative in a common network, the location may be estimated using receive signal strengths and base station locations associated with only one of the SIMs.

Another exemplary embodiment of the present invention provides a computer program comprising instructions arranged, when executed, to implement a method, system and/or apparatus, in accordance with any one of the above-described aspects. A further exemplary embodiment provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description taken in conjunction with the accompanying drawings, in which:
FIG. 1 illustrates a conventional method of recognizing a location of a multi-Subscriber Identification Module (SIM) mobile terminal;
FIG. 2 is a block diagram illustrating a structure of a system for estimating a location of a multi-SIM mobile terminal according to an exemplary embodiment of the present invention;
FIG. 3 is a flowchart of a process for estimating a location of a multi-SIM mobile terminal according to an exemplary embodiment of the present invention; and
FIG. 4 illustrates a midpoint determination process for estimating a mobile terminal location according to an exemplary embodiment of the present invention.

### DETAILED DESCRIPTION OF EXEMPLARY EMBODIMENTS

Exemplary embodiments of the present invention will be described herein below with reference to the accompanying drawings. The description and drawings are provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The same or similar components may be designated by the same or similar reference numerals although they may be illustrated in different drawings. Detailed descriptions of structures, constructions, functions or processes known in the art may be omitted for clarity and conciseness, and to avoid obscuring the subject matter of the present invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims. Also, terms used herein should be understood in the context of the description of the exemplary embodiments. Terms used may vary depending on user or operator intent and usage.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Exemplary embodiments described herein relate to a method, apparatus and system for determining the location of a multi-Subscriber Identification Module (SIM) mobile terminal by using cell information including strength of radio waves of at least one base station and a base station identifier (or a cell identifier (ID)).

Exemplary embodiments described herein provide a method, apparatus and system for estimating a location of a multi-SIM mobile terminal more accurately by receiving a location in a serving cell from each of two or more mobile networks serving the mobile terminal through two or more respective SIMs of the multi-SIM mobile terminal. When the SIMs are associated with different mobile networks, location information of the mobile terminal is estimated in one embodiment via cell information in each mobile network to obtain two or more estimated locations. These locations can then be combined (e.g. averaged) to more accurately obtain a final estimate. In an alternative embodiment, only one of the mobile networks (e.g. the network having better communication quality conditions) is selected for estimating the location of the mobile terminal.

Although the embodiments described herein use multiple SIMs, the skilled person will appreciate that any other suitable means that enable a mobile terminal to communicate with multiple networks may be used.

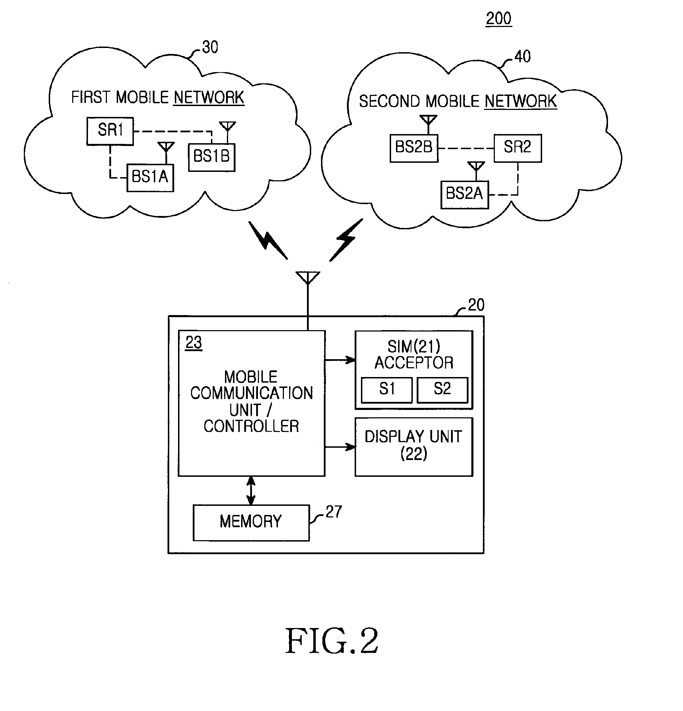

FIG. 2 is a block diagram illustrating a structure of a system, 200, for estimating the location of a multi-SIM mobile terminal according to an exemplary embodiment of the present invention. System 200 includes a multi-SIM mobile terminal 20 and mobile networks 30 and 40 operated by at least one mobile communication vendor for providing a mobile communication service to the multi-SIM mobile terminal 20.

The mobile terminal 20 is a portable wireless communication apparatus that cooperates with the mobile network to exchange data. The mobile terminal 20 may be in the form of, for example, a mobile phone, a Personal Digital Assistant (PDA), a Portable Multimedia Player (PMP), a navigation device, etc. The mobile terminal 20 includes a SIM acceptor 21 (e.g. comprising an interface including a number of slots) within which a plurality of SIMs S1, S2 may be removably attached. A mobile communication unit/controller 23 (hereafter referred to, for conciseness, as mobile communication unit 23) controls overall operations of the mobile terminal 20 and enables communication using the mobile network provided from the mobile communication vendor through each SIM. A display unit 22 outputs display information under the control of the mobile communication unit 23. The mobile terminal 20 may also include a GPS receiver (not shown). The user may be given the option of using the GPS receiver for location determination, and for turning off the GPS receiver, whereby a network-based location determination scheme may be used, for example the scheme as described below. As a further option, a network-based scheme, for example as described below, may be used only when GPS signals are deemed to be unavailable or unsuitable.

For example, the mobile communication unit 23 communicates with a first mobile network 30 through a first SIM S1, and with a second mobile network 40 through a second SIM S2. The first and second networks 30, 40 may be operated by the same or different vendors, and/or may use the same or different communication technologies. For instance, SIMs S1 and S2 may be used to provide different mobile phone numbers and/or different communication functions to the mobile terminal 20.

The mobile communication unit 23 cooperates with the mobile network to exchange cell information through signals (e. g. radio waves) from a serving cell which is defined by a base station to which the mobile communication unit 23 is currently connected (camped or in active communication). Optionally, the mobile terminal concurrently receives and measures the signal strength of a signal (e.g. radio signal), for example a pilot channel signal, from a neighbor cell which is defined by a base station adjacent to the serving cell. Accordingly, the mobile communication unit 23 receives a radio wave from at least one base station, e.g., one or more of: the serving cell; and one or more neighboring cells. Herein, a cell is an area (e.g. an area of coverage provided by a base station associated with the cell) that is part of a wider service region that has been divided into individual cells according to a cell pattern. A compact Transmit (Tx) power base station may be installed in a unit of a cell. The cell may define a relatively small service area in which mobile terminals are capable of receiving a radio service from a particular base station.

The mobile communication unit 23 is an element or module for receiving a signal transmitted from one or more of the serving cell and one or more neighbor cells, and can be configured with a Radio Frequency (RF) module capable of receiving radio waves modulated with only a single technology or with differing technologies such as 3G and 4G technologies. Further, the mobile communication unit 23 collects cell information including a base station identifier of the base station. Mobile communication unit 23 is further adapted to measure signal strength of the base station radio waves transmitted, for example in either a pilot channel or traffic channel. The signal strength measurement may further take into account noise, bit error ratio, etc. to obtain a measure of the quality of the communication channel. The base station identifier may be a unique identifier (ID) assigned to each base station.

The mobile communication unit 23 collects "cell information" which includes, for example, the base station identifier of the cell associated with each base station, and the measured receive signal strength of radio waves from the base station. The base station identifier is obtained from the base station radio waves, typically in a pilot channel. Cell information may also be periodically collected from at least one neighboring cell adjacent to the serving cell to which the mobile terminal is currently connected; this information may be stored separately in a memory 27.

The mobile communication unit 23 may transmit the collected cell information to a corresponding mobile network. The mobile networks 30 and 40 each include a server which may receive the cell information from the multi-SIM mobile terminal 10, obtain (e.g. determines and/or calculates) a location of the multi-SIM mobile terminal from the received cell information, and transmit the obtained location to the mobile communication unit 23.

In one example, the first network 30 serves mobile terminals via a plurality of base stations such as BS1A, BS1B which are communicatively coupled to at least one server SR1. Server SR1 calculates a current location (first location) of the mobile terminal 20 based on received signal strengths at the mobile terminal 20 of signals transmitted by base stations BS1A and BS1B. For instance, server SR1 may consult a database to ascertain the precise locations of base stations BS1A and BS1B (where BS1A is a currently serving base station for mobile terminal 20 and BS1B is a neighboring base station in this example), by correlating base station identifiers with location information (e.g. using a stored mapping between base station identifiers and location information of corresponding base stations). Server SR1 knows which base stations correspond to the receive signal strength measurements by mobile terminal 20 by receiving the base station identifiers from the mobile terminal 20 (or from the base stations themselves as the base stations route the signal strength measurement data to the servers). Server SR1 also knows the absolute power transmitted by base stations BS1A and BS1B, based on predetermined information stored in the database, or based on periodic updates from the base stations. Server SR1 can then estimate the distance between the mobile terminal 20 and the serving base station BS1A based on the difference (or ratio) between the absolute power transmitted by base station BS1A and the signal strength received at mobile terminal 20 (calibrated for its antenna gain as well as the antenna gain of the base station antenna). When this is done only for one base station (e.g. the serving base station), the mobile terminal position is estimated as a locus of points defined by a circle having the base station at its centre, and having a radius equal to the estimated distance. Another locus of points may be obtained for another bases station (e.g. at least one neighboring base station BS1B) in the same manner. The first location is then estimated at the point of intersection of the two loci of points forming circles having the determined radii around the two base stations (e.g. the serving base station BS1A and the neighboring base station BS1B); and this first location is transmitted to the mobile terminal 20.

In some embodiments, three or more locations may be determined from three or more base stations, and the three or more locations may be suitably combined (e.g. using averaging) to obtain a more accurate overall estimate. In some embodiments, a third location may be used to verify the accuracy of the location estimate obtained from two other locations.

Similarly, the second mobile network 40 serves mobile terminals via a plurality of different base stations such as BS2A, BS2B coupled to at least one server SR2. Server SR2 may concurrently calculate a location (second location) of the mobile terminal 20 based on receive signal strengths at the mobile terminal 20 of signals transmitted by base stations BS2A and BS2B. This second location is then transmitted to the mobile terminal 20, which may then estimate a final location as a midpoint between the first and second locations.

In an alternative embodiment, the mobile terminal 20 may perform some or all of the location calculations for the first and second locations, and/or may calculate the midpoint of these locations (as described below), such that servers SR1 and SR2 may not be needed for the location determination. This embodiment may be implemented, for example, by means of the base stations providing their precise locations and absolute power levels (calibrated for base station antenna gains) to the mobile terminal 20 in a suitable control channel. The mobile communication unit 23 can then perform some or all of the calculations otherwise performed by the servers SR1 and SR2 to obtain the first and second locations, and thereafter calculate the midpoint of the two locations to arrive at a more accurate location estimate.

In another embodiment, instead of estimating the location from the first and second locations, the mobile terminal may select cell information of one of the first and second networks in which communication quality is superior, to estimate the mobile terminal location. For instance, if the second network is determined to have better communication quality (e.g., less noise or a significantly stronger signal), the location may be determined as just the second location. As in the embodiment discussed above, the second location may be determined, for example, based on the locations of the second serving base station BS2A and at least one neighboring second base station BS2B in conjunction with the receive signal strengths of only these second base stations. In this case, there is no need to transmit cell information to the first server SR1. This embodiment may be implemented via server SR2 determining the second location, or alternatively by the mobile terminal 20 performing all the location calculations without transmitting cell information to server SR2, in the manner described above for the alternative design.

It is also possible for the plurality of SIMs S1, S2 to be SIMs provided by the same mobile communication vendor for use in a common mobile network. For instance, SIMs S 1 and S2 could each be configured for use in the first mobile network 30 but not in the second mobile network 40. In this case, SIMs S1, S2 could be used to provide different mobile phone numbers to mobile terminal 20, and/or for different communication functions. Location would then be determined based on the location information of the base stations BS1A, BS1B in the first network in conjunction with the receive signal strengths at the mobile terminal 20.

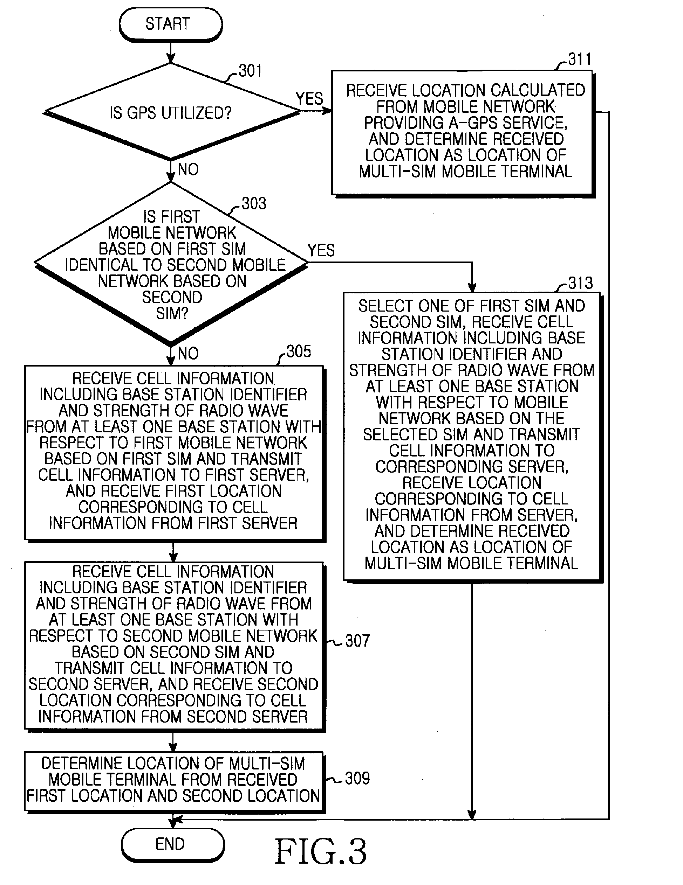

FIG. 3 is a flowchart of a process for recognizing a location of a multi-SIM mobile terminal according to an exemplary embodiment of the present invention. In this process, mobile communication unit 23 determines whether a GPS is utilized to recognize the location in step 301. As mentioned above, a GPS location determining mode may be unavailable if a GPS option is switched off by a user control, or if suitable GPS signals are not received. If the GPS is not utilized, proceeding to step 303, the mobile communication unit 23 determines whether the first mobile network based on the first SIM is identical to the second mobile network based on the second SIM. (Herein, when the first and second mobile networks are determined to be identical, this means the mobile network is a common network. That is, the first and second networks are to be considered a single network using the same base stations and at least one common server.)

If it is determined in step 301 and 303 that the GPS is not utilized and the first mobile network based on the first SIM is different from the second mobile network based on the second SIM, proceeding to step 305, the mobile communication unit 23 receives cell information including a base station identifier and strength of radio waves from at least one base station with respect to the first mobile network based on the first SIM and transmits the cell information to a first server, and receives a first location corresponding to the cell information from the first server.

In step 307, the mobile communication unit 23 receives the cell information including the base station identifier and the strength of radio waves from at least one base station with respect to the second mobile network based on the second SIM, transmits the cell information to a second server, and receives a second location corresponding to the cell information from the second server.

In step 309, the mobile communication unit 23 determines the location of the multi-SIM mobile terminal from the received first location and second location (i.e., if both the first and second locations are provided. For example, the mobile communication unit 23 may determine a middle point of the first location and the second location as the location of the multi-SIM mobile terminal. Alternatively, if it is determined that the communication quality of one of the first mobile network is poor (below a predetermined threshold) but that of the second mobile network is satisfactory, only the second location may be used as the final estimated location (and vice versa). In some embodiments, where multiple location estimates are determined, the location estimates may be combined to obtain a final estimate by an averaging process. In some embodiments, a weighted average may be used. For examples, the individual location estimates may be weighted according to their estimated reliability (e.g. measured by communication quality etc.).

If it is determined in step 301 and step 303 that the GPS is not utilized and the first mobile network based on the first SIM is equivalent to the second mobile network based on the second SIM, proceeding to step 313, the mobile communication unit 23 selects one of the first SIM and the second SIM, receives cell information including a base station identifier and strength of radio waves from at least one base station with respect to a mobile network based on the selected SIM, and transmits the cell information to a corresponding server. Thereafter, the mobile communication unit 23 receives a location corresponding to the cell information from the server, and determines the received location as the location of the multi-SIM mobile terminal.

If it is determined in step 301 that the GPS is utilized, proceeding to step 311, the mobile communication unit 23 identifies a mobile network which provides an Assisted GPS (A-GPS) server between the first mobile network based on the first SIM and the second mobile network based on the second SIM, and transmits GPS satellite information confirmed on the basis of information of an occupied base station to the mobile network for providing the A-GPS service. The mobile network for providing the A-GPS service can receive GPS satellite information from the mobile terminal, calculate a location from the received GPS satellite information, and transmits the calculated location to the mobile terminal. Thereafter, the mobile communication unit 23 receives a location corresponding to the GPS satellite information from the mobile network which provides the A-GPS service, and determines the received location as the location of the multi-SIM mobile terminal.

In an alternative embodiment, if (1) the GPS is not utilized, (2) the first and second networks are different, and (3) quality of signal transmission and reception through the second mobile network is below a quality threshold, then location determination is performed using only cell information of the first network (and vice versa if the first network quality is below a threshold while the second network quality is above the threshold). That is, the mobile communication unit 23 receives the cell information including the base station identifier and the strength of radio waves from at least one base station with respect to the first mobile network and transmits the cell information to the first server. Thereafter, the mobile communication unit 23 performs an operation for receiving a location corresponding to the cell information from the first server and for determining the received location as the location of the multi-SIM mobile terminal. That is, in this implementation, the mobile communication unit 23 selects only one of the mobile networks of which signal transmission and reception have relatively good quality. For example, when the mobile terminal is located near a boundary of two cells, quality of signal transmission and reception can deteriorate at the occurrence of a ping-pong situation in which a call is delivered repetitively forwards and backwards between two base stations. This may present a scenario in which it is beneficial to use only the mobile network providing better quality for location determination.

As mentioned earlier, as an alternative to the first and second locations being determined by the first and second servers, respectively, they may be partly or fully determined by the mobile terminal 20. This can be done, for example, by provisioning the system to transmit the precise base station location information to the mobile terminal along with absolute powers transmitted by the relevant base stations calibrated for base station antenna gains. In this embodiment, the mobile terminal 20 need not transmit cell information to the servers.

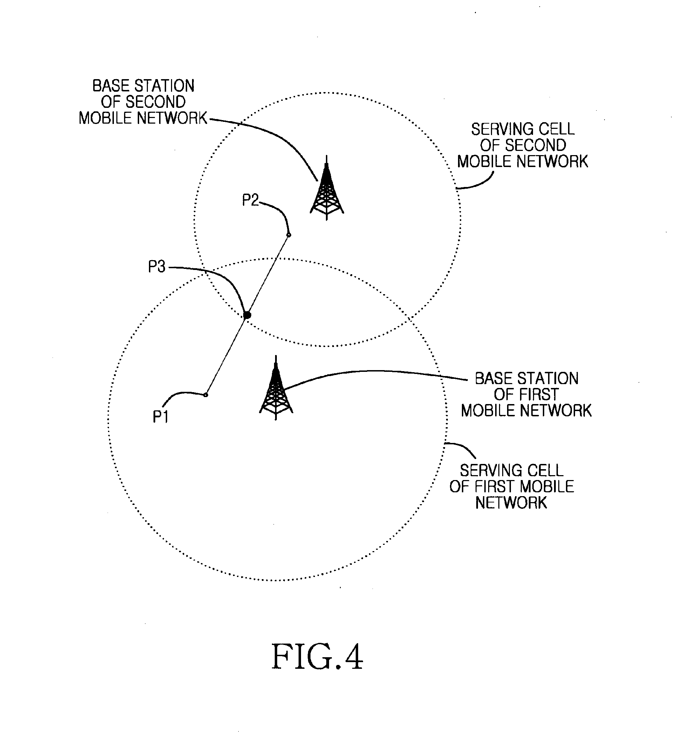

FIG. 4 illustrates a midpoint determination process for estimating a location of a multi-SIM mobile terminal according to an exemplary embodiment of the present invention. With this technique, the mobile communication unit 23 operates according to the following procedure if the GPS is not utilized and the first mobile network based on the first SIM is different from the second mobile network based on the second SIM.

The mobile communication unit 23 receives cell information including a base station identifier and strength of radio waves from at least one base station with respect to the first mobile network. The first server of the first mobile network obtains a serving cell and a location P1 in the serving cell from the cell information, and transmits the obtained location P 1 to the mobile communication unit 23. Further, the mobile communication unit 23 receives the cell information including the base station identifier and the strength of radio waves from at least one base station with respect to the second mobile network, and transmits the cell information to the second server. The second server of the second mobile network obtains a serving cell and a location P2 in the serving cell from the cell information, and transmits the obtained location P2 to the mobile communication unit 23.

The mobile communication unit 23 determines the location of the multi-SIM mobile terminal from the received locations P 1 and P2 by applying a pre-set algorithm. For example, a middle point of the two locations P 1 and P2 can be determined as the location of the mobile terminal.

As described above, various techniques for determining the location of a multi-SIM mobile terminal may be used, including, for example: (i) using a GPS service; (ii) using location information based on one of the SIMs where the first network based on the first SIM and the second network based on the second SIM are the same; and (iii) using location information based on two SIMs where the first and second networks are different. The skilled person will appreciate that these techniques, and other techniques described herein, and other techniques that will readily occur to the skilled person, may be used in any combination in various embodiments.

As will be understood by the above, embodiments of the present invention can more accurately estimate the location of a mobile terminal by receiving the location in the serving cell from respective mobile networks allowed for a plurality of SIMs of the multi-SIM mobile terminal.

It will be appreciated that embodiments of the present invention according to the claims and description in the specification can be realized in the form of hardware, software or a combination of hardware and software.

Any such software may be stored in a computer readable storage medium. The computer readable storage medium may store one or more programs (software modules), the one or more programs comprising instructions, which when executed by one or more processors in an electronic device, cause the electronic device to perform a method according to the present invention.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present invention has been particularly shown and described with reference to exemplary embodiments thereof, it will be understood by those skilled in the art that various changes in form and details may be made therein without departing from the scope of the present invention as defined by the appended claims.

## Claims

1. A method of determining a location of a multi-Subscriber Identification Module, SIM, mobile terminal (20) having at least first and second SIMs mounted therein, the method comprising:
determining network quality of a first mobile network (30) using the first SIM and a second mobile network (40) using the second SIM; and
if the network quality of both the first and second mobile networks (30, 40) are above a threshold:
determining a first location based on a location of at least one first base station in the first mobile network (30);
determining a second location based on a location of at least one second base station in the second mobile network (40); and
estimating the location of the multi-SIM mobile terminal (20) from the first and second locations,
if the network quality of one of the first and second mobile networks (30, 40) is above the threshold:
determining a location based on a location of at least one base station in the one of the first and second mobile networks (30, 40); and
estimating the location of the multi-SIM mobile terminal (20) from the determined location.

2. The method of claim 1, wherein estimating the location of the multi-SIM mobile terminal (20) from the first and second locations comprises determining a middle point of the first location and the second location.

3. The method of claim 1, wherein if the network quality of both the first and second mobile networks (30, 40) are above a threshold, further comprising:
transmitting, by the mobile terminal (20), a receive signal strength of the at least one first base station signal to a first server operating in the first mobile network (30), the first location then being determined by the first server;
receiving, by the mobile terminal (20), the first location determined and transmitted by the first server;
transmitting, by the mobile terminal (20), a receive signal strength of the at least one second base station signal to a second server operating in the second mobile network (40), the second location then being determined by the second server; and
receiving, by the mobile terminal (20), the second location determined and transmitted by the second server;
wherein the estimating the location of the mobile terminal (20) is performed at the mobile terminal (20) from the received first and second locations.

4. The method of claim 3, wherein the first and second servers each determine the location of the respective at least one first base station and at least one second base station by correlating base station identifiers thereof with location information in a database.

5. The method of any preceding claim, further comprising activating a GPS location determination process comprising:
identifying a mobile network for providing an Assisted GPS, A-GPS, service between the first mobile network (30) based on the first SIM and the second mobile network (40) based on the second SIM;
transmitting GPS satellite information confirmed based on information of an occupied base station to the mobile network for providing the A-GPS service, and receiving a location corresponding to the GPS satellite information from the mobile network for providing the A-GPS service; and
determining the location received through the mobile network for providing the A-GPS service as the location of the multi-SIM mobile terminal (20).

6. The method of any preceding claim, wherein,
the at least one first base station in the first mobile network (30) comprises a serving first base station and at least one neighboring first base station, the first location being determined as a function of locations of the serving first base station and the at least one neighboring first base station in conjunction with received signal strengths of signals transmitted by the serving first base station and the at least one neighboring first base station; and
the at least one second base station in the second mobile network (40) comprises a serving second base station and at least one neighboring second base station, the second location being determined as a function of locations of the serving second base station and the at least one neighboring second base station in conjunction with received signal strengths of signals transmitted by the serving second base station and the at least one neighboring second base station.

7. An apparatus for determining a location of a multi-SIM mobile terminal (20), the apparatus comprising:
a SIM acceptor (21) within which at least first and second SIMs are mounted; and
a mobile communication unit (23) coupled to the SIM acceptor (21) and configured to:
determine network quality of a first mobile network (30) using the first SIM and a second mobile network (40) using the second SIM,
if the network quality of both the first and second mobile networks (30, 40) are above a threshold, determine a first location based on a location of at least one first base station in the first mobile network (30), determine a second location based on a location of at least one second base station in the second mobile network (40), and estimate the location of the multi-SIM mobile terminal (20) from the first and second locations, and
if the network quality of one of the first and second mobile networks (30, 40) is above the threshold, determine a location based on a location of at least one base station in the one of the first and second mobile networks (30, 40), estimate the location of the multi-SIM mobile terminal (20) from the determined location.

8. The apparatus of claim 7, wherein the mobile communication unit (23) is further operative to determine a middle point of the first location and the second location as the estimated location of the multi-SIM mobile terminal (20).

9. The apparatus of claim 7, wherein if the network quality of both the first and second mobile networks (30, 40) are above a threshold, the mobile communication unit (23) is further operative to:
transmit a receive signal strength of the at least one first base station signal to a first server operating in the first mobile network (30), the first location then being determined by the first server;
receive the first location determined and transmitted by the first server;
transmit a receive signal strength of the at least one second base station signal to a second server operating in the second mobile network (40), the second location then being determined by the second server;
receive the second location determined and transmitted by the second server; and
estimate the location of the mobile terminal (20) from the received first and second locations.

10. The apparatus of claim 9, wherein the mobile communication unit (23) is further operative to transmit base station identifiers to the first and second servers to enable the first and second servers to correlate the base station identifiers with base station location information stored in a database and thereby determine the first and second locations.

11. The apparatus of claim 7, wherein the mobile communication unit (23) is further configured to control location estimation of the mobile terminal (20) in a GPS mode in which a mobile network is identified for providing an A-GPS service between the first mobile network (30) based on the first SIM and the second mobile network (40) based on the second SIM, transmit GPS satellite information confirmed based on information of an occupied base station to the mobile network for providing the A-GPS service and receiving a location corresponding to the GPS satellite information from the mobile network for providing the A-GPS service, and determine the location received through the mobile network for providing the A-GPS service as the location of the multi-SIM mobile terminal (20).

12. The apparatus of claim 7, wherein,
the at least one first base station in the first mobile network (30) comprises a serving first base station and at least one neighboring first base station, the mobile communication unit (23) is configured to measure receive signal strengths of signals of the serving first base station and of the at least one neighboring base station, the first location being determined as a function of locations of the serving first base station and the at least one neighboring first base station in conjunction with the received signal strengths; and
the at least one second base station in the second mobile network (40) comprises a serving second base station and at least one neighboring second base station, the mobile communication unit (23) is configured to measure receive signal strengths of signals of the serving second base station and of the at least one neighboring second base station, the second location being determined as a function of locations of the serving second base station and the at least one neighboring second base station in conjunction with the received signal strengths of the signals transmitted by the serving second base station and the at least one neighboring second base station.

## Patentansprüche

1. Verfahren zum Ermitteln einer Position eines mobilen Endgeräts (20) mit Multi-Teilnehmeridentifikationsmodul (SIM - Subscriber Identification Module), in dem sich mindestens eine erste und eine zweite SIM-Karte befinden, wobei das Verfahren Folgendes umfasst:
Ermitteln der Netzwerkqualität eines ersten Mobilfunknetzwerks (30) unter Verwendung der ersten SIM-Karte und eines zweiten Mobilfunknetzwerks (40) unter Verwendung der zweiten SIM-Karte und
wenn die Netzwerkqualität sowohl des ersten als auch des zweiten Mobilfunknetzwerks (30, 40) über einem Schwellenwert liegt:
Ermitteln einer ersten Position basierend auf einer Position von mindestens einer ersten Basisstation in dem ersten Mobilfunknetzwerk (30);
Ermitteln einer zweiten Position basierend auf einer Position von mindestens einer zweiten Basisstation in dem zweiten Mobilfunknetzwerk (40); und
Schätzen der Position des mobilen Multi-SIM-Endgeräts (20) ausgehend von der ersten und der zweiten Position,
wenn die Netzwerkqualität des ersten oder des zweiten Mobilfunknetzwerks (30, 40) über dem Schwellenwert liegt:
Ermitteln einer Position basierend auf einer Position von mindestens einer Basisstation in dem ersten oder zweiten Mobilfunknetzwerk (30, 40); und
Schätzen der Position des mobilen Multi-SIM-Endgeräts (20) ausgehend von der ermittelten Position.

2. Verfahren nach Anspruch 1, wobei das Schätzen der Position des mobilen Multi-SIM-Endgeräts (20) ausgehend von der ersten und der zweiten Position das Ermitteln eines Mittelpunkts der ersten Position und der zweiten Position umfasst.

3. Verfahren nach Anspruch 1, wobei das Verfahren, wenn die Netzwerkqualität sowohl des ersten als auch des zweiten Mobilfunknetzwerks (30, 40) über einem Schwellenwert liegt, ferner Folgendes umfasst:
Senden, mit Hilfe des mobiles Endgeräts (20), einer Empfangssignalstärke des mindestens einen ersten Basisstationssignals zu einem ersten Server, der in dem ersten Mobilfunknetzwerk (30) arbeitet, wobei die erste Position daraufhin von dem ersten Server ermittelt wird;
Empfangen, durch das mobile Endgerät (20), der ersten Position, die von dem ersten Server ermittelt und gesendet wird;
Senden, mit Hilfe des mobiles Endgeräts (20), einer Empfangssignalstärke des mindestens einen zweiten Basisstationssignals zu einem zweiten Server, der in dem zweiten Mobilfunknetzwerk (40) arbeitet, wobei die zweite Position daraufhin von dem zweiten Server ermittelt wird; und
Empfangen, durch das mobile Endgerät (20), der zweiten Position, die von dem zweiten Server ermittelt und gesendet wird;
wobei das Schätzen der Position des mobilen Endgeräts (20) ausgehend von der empfangenen ersten und zweiten Position an dem mobilen Endgerät (20) durchgeführt wird.

4. Verfahren nach Anspruch 3, wobei der erste und der zweite Server jeweils die Position der entsprechenden mindestens einen ersten Basisstation und der mindestens einen zweiten Basisstation durch Korrelation von Basisstationskennungen derselben mit Positionsinformationen in einer Datenbank ermitteln.

5. Verfahren nach einem der vorhergehenden Ansprüche, das ferner das Aktivieren eines GPS-Positionsermittlungsverfahrens umfasst, das Folgendes umfasst:
Identifizieren eines Mobilfunknetzwerks zum Bereitstellen eines assistierten GPS-Dienstes, (A-GPS - Assisted GPS) zwischen dem ersten Mobilfunknetzwerk (30), das auf der ersten SIM-Karte basiert, und dem zweiten Mobilfunknetzwerk (40), das auf der zweiten SIM-Karte basiert;
Senden von GPS-Satelliteninformationen, die basierend auf Informationen einer besetzten Basisstation bestätigt sind, zu dem Mobilfunknetzwerk zur Bereitstellung des A-GPS-Dienstes und Empfangen einer Position, die den GPS-Satelliteninformationen von dem Mobilfunknetzwerk entspricht, zur Bereitstellung des A-GPS-Dienstes; und
Bestimmen der Position, die über das Mobilfunknetzwerk zur Bereitstellung des A-GPS-Dienstes empfangen wurde, als Position des mobilen Multi-SIM-Endgeräts (20).

6. Verfahren nach einem der vorhergehenden Ansprüche, wobei
die mindestens eine erste Basisstation in dem ersten Mobilfunknetzwerk (30) eine bedienende erste Basisstation und mindestens eine benachbarte erste Basisstation umfasst, wobei die erste Position als Funktion von Folgendem ermittelt wird: Positionen der bedienenden ersten Basisstation und der mindestens einen benachbarten ersten Basisstation in Verbindung mit empfangenen Signalstärken von Signalen, die von der bedienenden ersten Basisstation und der mindestens einen benachbarten ersten Basisstation gesendet werden; und
wobei die mindestens eine zweite Basisstation in dem zweiten Mobilfunknetzwerk (40) Folgendes umfasst: eine bedienende zweite Basisstation und mindestens eine benachbarte zweite Basisstation, wobei die zweite Position als Funktion von Folgendem ermittelt wird: Positionen der bedienenden zweiten Basisstation und der mindestens einen benachbarten zweiten Basisstation in Verbindung mit empfangenen Signalstärken von Signalen, die von der bedienenden zweiten Basisstation und der mindestens einen benachbarten zweiten Basisstation gesendet werden.

7. Vorrichtung zum Bestimmen einer Position eines mobilen Multi-SIM-Endgeräts (20), wobei die Vorrichtung Folgendes umfasst:
eine SIM-Aufnahmevorrichtung (21), in der sich mindestens eine erste und eine zweite SIM-Karte befinden; und
eine mobile Kommunikationseinheit (23), die mit der SIM-Aufnahmevorrichtung (21) gekoppelt ist und für Folgendes konfiguriert ist:
Ermitteln der Netzwerkqualität eines ersten Mobilfunknetzwerks (30) unter Verwendung der ersten SIM-Karte und eines zweiten Mobilfunknetzwerks (40) unter Verwendung der zweiten SIM-Karte,
wenn die Netzwerkqualität sowohl des ersten als auch des zweiten Mobilfunknetzwerks (30, 40) über einem Schwellenwert liegt: Ermitteln einer ersten Position basierend auf einer Position von mindestens einer ersten Basisstation in dem ersten Mobilfunknetzwerk (30); Ermitteln einer zweiten Position basierend auf einer Position von mindestens einer zweiten Basisstation in dem zweiten Mobilfunknetzwerk (40), und Schätzen der Position des mobilen Multi-SIM-Endgeräts (20) ausgehend von der ersten und der zweiten Position, und
wenn die Netzwerkqualität des ersten oder des zweiten Mobilfunknetzwerks (30, 40) über dem Schwellenwert liegt: Ermitteln einer Position basierend auf einer Position von mindestens einer Basisstation in dem ersten oder zweiten Mobilfunknetzwerk (30, 40) und Schätzen der Position des mobilen Multi-SIM-Endgeräts (20) ausgehend von der ermittelten Position.

8. Vorrichtung nach Anspruch 7, wobei die mobile Kommunikationseinheit (23) ferner Folgendes ermitteln kann: einen Mittelpunkt der ersten Position und der zweiten Position als geschätzte Position des Multi-SIM-Endgeräts (20).

9. Vorrichtung nach Anspruch 7, wobei wenn die Netzwerkqualität sowohl des ersten als auch des zweiten Mobilfunknetzwerks (30, 40) über einem Schwellenwert liegt, die mobile Kommunikationseinheit (23) ferner für Folgendes ausgelegt ist:
Senden einer Empfangssignalstärke des mindestens einen ersten Basisstationssignals zu einem ersten Server, der in dem ersten Mobilfunknetzwerk (30) arbeitet, wobei die erste Position daraufhin von dem ersten Server ermittelt wird;
Empfangen der ersten Position, die von dem ersten Server ermittelt und gesendet wird;
Senden einer Empfangssignalstärke des mindestens einen zweiten Basisstationssignals zu einem zweiten Server, der in dem zweiten Mobilfunknetzwerk (40) arbeitet, wobei die zweite Position daraufhin von dem zweiten Server ermittelt wird;
Empfangen der zweiten Position, die von dem zweiten Server ermittelt und gesendet wird; und
Schätzen der Position des mobilen Endgeräts (20) ausgehend von der empfangenen ersten und zweiten Position.

10. Vorrichtung nach Anspruch 9, wobei die mobile Kommunikationseinheit (23) ferner dafür ausgelegt ist, Basisstationskennungen zu dem ersten und zweiten Server zu senden, damit der erste und zweite Server die Basisstationskennungen mit Basisstationspositionsinformationen korrelieren kann, die in einer Datenbank gespeichert sind, und dadurch die erste und zweite Position ermitteln kann.

11. Vorrichtung nach Anspruch 7, wobei die mobile Kommunikationseinheit (23) ferner dafür konfiguriert ist, die Positionsschätzung des mobilen Endgeräts (20) in einem GPS-Modus zu steuern, bei dem ein Mobilfunknetzwerk identifiziert wird, um einen A-GPS-Dienst zwischen dem ersten Mobilfunknetzwerk (30), das auf der ersten SIM-Karte basiert, und dem zweiten Mobilfunknetzwerk (40), das auf der zweiten SIM-Karte basiert, bereitzustellen; Senden von GPS-Satelliteninformationen, die basierend auf Informationen einer besetzten Basisstation bestätigt sind, zu dem Mobilfunknetzwerk zur Bereitstellung des A-GPS-Dienstes und Empfangen einer Position, die den GPS-Satelliteninformationen von dem Mobilfunknetzwerk entspricht, zur Bereitstellung des A-GPS-Dienstes, und Bestimmen der Position, die über das Mobilfunknetzwerk zur Bereitstellung des A-GPS-Dienstes empfangen wurde, als Position des mobilen Multi-SIM-Endgeräts (20).

12. Vorrichtung nach Anspruch 7, wobei
die mindestens eine erste Basisstation in dem ersten Mobilfunknetzwerk (30) eine bedienende erste Basisstation und mindestens eine benachbarte erste Basisstation umfasst, die mobile Kommunikationseinheit (23) dafür konfiguriert ist, Empfangssignalstärken von Signalen der bedienenden ersten Basisstation und der mindestens einen benachbarten Basisstation zu messen, wobei die erste Position als Funktion von Folgendem ermittelt wird: Positionen der bedienenden ersten Basisstation und der mindestens einen benachbarten ersten Basisstation in Verbindung mit den empfangenen Signalstärken; und
die mindestens eine zweite Basisstation in dem zweiten Mobilfunknetzwerk (40) eine bedienende zweite Basisstation und mindestens eine benachbarte zweite Basisstation umfasst, die mobile Kommunikationseinheit (23) dafür konfiguriert ist, Empfangssignalstärken von Signalen der bedienenden zweiten Basisstation und der mindestens einen benachbarten zweiten Basisstation zu messen, wobei die zweite Position als Funktion von Folgendem ermittelt wird: Positionen der bedienenden zweiten Basisstation und der mindestens einen benachbarten zweiten Basisstation in Verbindung mit den empfangenen Signalstärken von Signalen, die von der bedienenden zweiten Basisstation und der mindestens einen benachbarten zweiten Basisstation gesendet werden.

## Revendications

1. Un procédé de détermination d'un emplacement d'un terminal mobile multi-module d'identification d'abonné, SIM, (20) possédant au moins une première et une deuxième cartes SIM montées dans celui-ci, le procédé comprenant :
la détermination d'une qualité de réseau d'un premier réseau mobile (30) au moyen de la première carte SIM et d'un deuxième réseau mobile (40) au moyen de la deuxième carte SIM, et,
si la qualité de réseau du premier et du deuxième réseau mobile (30, 40) est supérieure à un seuil :
la détermination d'un premier emplacement en fonction d'un emplacement d'au moins une première station de base dans le premier réseau mobile (30),
la détermination d'un deuxième emplacement en fonction d'un emplacement d'au moins une deuxième station de base dans le deuxième réseau mobile (40), et
l'estimation de l'emplacement du terminal mobile multi-SIM (20) à partir des premier et deuxième emplacements,
si la qualité de réseau de l'un des premier et deuxième réseaux mobiles (30, 40) est supérieure au seuil :
la détermination d'un emplacement en fonction d'un emplacement d'au moins une station de base dans l'un des premier et deuxième réseaux mobiles (30, 40), et
l'estimation de l'emplacement du terminal mobile multi-SIM (20) à partir de l'emplacement déterminé.

2. Le procédé selon la Revendication 1, où l'estimation de l'emplacement du terminal mobile multi-SIM (20) à partir des premier et deuxième emplacements comprend la détermination d'un point médian du premier emplacement et du deuxième emplacement.

3. Le procédé selon la Revendication 1, où si la qualité de réseau du premier et du deuxième réseau mobile (30, 40) est supérieure à un seuil, comprenant en outre :
la transmission, par le terminal mobile (20), d'une puissance de signal reçue du signal de la au moins une première station de base à un premier serveur fonctionnant dans le premier réseau mobile (30), le premier emplacement étant ensuite déterminé par le premier serveur,
la réception, par le terminal mobile (20), du premier emplacement déterminé et transmis par le premier serveur,
la transmission, par le terminal mobile (20), d'une puissance de signal reçue du signal de la au moins une deuxième station de base de base à un deuxième serveur fonctionnant dans le deuxième réseau mobile (40), le deuxième emplacement étant ensuite déterminé par le deuxième serveur, et
la réception, par le terminal mobile (20), du deuxième emplacement déterminé et transmis par le deuxième serveur,
où l'estimation de l'emplacement du terminal mobile (20) est exécutée au niveau du terminal mobile (20) à partir des premier et deuxième emplacements reçus.

4. Le procédé selon la Revendication 3, où les premier et deuxième serveurs déterminent chacun l'emplacement de la au moins une première station de base et de la au moins une deuxième station de base respectives par la corrélation d'identifiants de station de base de celles-ci avec des informations d'emplacement dans une base de données.

5. Le procédé selon l'une quelconque des Revendications précédentes, comprenant en outre l'activation d'un processus de détermination d'emplacement par GPS comprenant :
l'identification d'un réseau mobile pour la fourniture d'un service de GPS assisté, A-GPS, entre le premier réseau mobile (30) en fonction de la première carte SIM et le deuxième réseau mobile (40) en fonction de la deuxième carte SIM,
la transmission d'informations de satellite GPS confirmées en fonction d'informations d'une station de base occupée au réseau mobile pour la fourniture du service A-GPS, et la réception d'un emplacement correspondant aux informations de satellite GPS à partir du réseau mobile pour la fourniture du service A-GPS, et
la détermination de l'emplacement reçu par l'intermédiaire du réseau mobile pour la fourniture du service A-GPS en tant qu'emplacement du terminal mobile multi-SIM (20).

6. Le procédé selon l'une quelconque des Revendications précédentes, où,
la au moins une première station de base dans le premier réseau mobile (30) comprend une première station de base de desserte et au moins une première station de base voisine, le premier emplacement étant déterminé sous la forme d'une fonction d'emplacements de la première station de base de desserte et de la au moins une première station de base voisine conjointement avec des puissances de signal reçues de signaux transmis par la première station de base de desserte et la au moins une première station de base voisine, et
la au moins une deuxième station de base dans le deuxième réseau mobile (40) comprend une deuxième station de base de desserte et au moins une deuxième station de base voisine, le deuxième emplacement étant déterminé sous la forme d'une fonction d'emplacements de la deuxième station de base de desserte et de la au moins une deuxième station de base voisine conjointement avec des puissances de signal reçues de signaux transmis par la deuxième station de base de desserte et la au moins une deuxième station de base voisine.

7. Un appareil de détermination d'un emplacement d'un terminal mobile multi-SIM (20), l'appareil comprenant :
un accepteur SIM (21) à l'intérieur duquel au moins une première et une deuxième cartes SIM sont montées, et
une unité de communication mobile (23) couplée à l'accepteur SIM (21) et configurée de façon à :
déterminer une qualité de réseau d'un premier réseau mobile (30) au moyen de la première carte SIM et d'un deuxième réseau mobile (40) au moyen de la deuxième carte SIM,
si la qualité de réseau du premier et du deuxième réseau mobile (30, 40) est supérieure à un seuil, déterminer un premier emplacement en fonction d'un emplacement d'au moins une première station de base dans le premier réseau mobile (30), déterminer un deuxième emplacement en fonction d'un emplacement d'au moins une deuxième station de base dans le deuxième réseau mobile (40), et estimer l'emplacement du terminal mobile multi-SIM (20) à partir des premier et deuxième emplacements, et
si la qualité de réseau de l'un des premier et deuxième réseaux mobiles (30, 40) est supérieure au seuil, déterminer un emplacement en fonction d'un emplacement d'au moins une station de base dans l'un des premier et deuxième réseaux mobiles (30, 40), estimer l'emplacement du terminal mobile multi-SIM (20) à partir de l'emplacement déterminé.

8. L'appareil selon la Revendication 7, où l'unité de communication mobile (23) est conçue en outre de façon à déterminer un point médian du premier emplacement et du deuxième emplacement en tant qu'emplacement estimé du terminal mobile multi-SIM (20).

9. L'appareil selon la Revendication 7, où si la qualité de réseau du premier et du deuxième réseau mobile (30, 40) est supérieure à un seuil, l'unité de communication mobile (23) est conçue en outre de façon à :
transmettre une puissance de signal reçue du signal de la au moins une première station de base à un premier serveur fonctionnant dans le premier réseau mobile (30), le premier emplacement étant ensuite déterminé par le premier serveur,
recevoir le premier emplacement déterminé et transmis par le premier serveur,
transmettre une puissance de signal reçue du signal de la au moins une deuxième station de base de base à un deuxième serveur fonctionnant dans le deuxième réseau mobile (40), le deuxième emplacement étant ensuite déterminé par le deuxième serveur,
recevoir le deuxième emplacement déterminé et transmis par le deuxième serveur, et
estimer l'emplacement du terminal mobile (20) à partir des premier et deuxième emplacements reçus.

10. L'appareil selon la Revendication 9, où l'unité de communication mobile (23) est conçue en outre de façon à transmettre des identifiants de station de base aux premier et deuxième serveurs de façon à permettre aux premier et deuxième serveurs de corréler les identifiants de station de base avec des informations d'emplacement de station de base conservées en mémoire dans une base de données et ainsi déterminer les premier et deuxième emplacements.

11. L'appareil selon la Revendication 7, où l'unité de communication mobile (23) est configurée en outre de façon à commander une estimation d'emplacement du terminal mobile (20) dans un mode GPS dans lequel un réseau mobile est identifié pour la fourniture d'un service A-GPS entre le premier réseau mobile (30) en fonction de la première carte SIM et le deuxième réseau mobile (40) en fonction de la deuxième carte SIM, à transmettre des informations de satellite GPS confirmées en fonction d'informations d'une station de base occupée au réseau mobile pour la fourniture du service A-GPS et à recevoir un emplacement correspondant aux informations de satellite GPS à partir du réseau mobile pour la fourniture du service A-GPS, et à déterminer l'emplacement reçu par l'intermédiaire du réseau mobile pour la fourniture du service A-GPS en tant qu'emplacement du terminal mobile multi-SIM (20).

12. L'appareil selon la Revendication 7, où,
la au moins une première station de base dans le premier réseau mobile (30) comprend une première station de base de desserte et au moins une première station de base voisine, l'unité de communication mobile (23) est configurée de façon à mesurer des puissances de signal reçues de signaux de la première station de base de desserte et de la au moins une station de base voisine, le premier emplacement étant déterminé sous la forme d'une fonction d'emplacements de la première station de base de desserte et de la au moins une première station de base voisine conjointement avec les puissances de signal reçu, et
la au moins une deuxième station de base dans le deuxième réseau mobile (40) comprend une deuxième station de base de desserte et au moins une deuxième station de base voisine, l'unité de communication mobile (23) est configurée de façon à mesurer des puissances de signal reçues de signaux de la deuxième station de base de desserte et de la au moins une deuxième station de base voisine, le deuxième emplacement étant déterminé sous la forme d'une fonction d'emplacements de la deuxième station de base de desserte et de la au moins une deuxième station de base voisine conjointement avec les puissances de signal reçues des signaux transmis par la deuxième station de base de desserte et la au moins une deuxième station de base voisine.
